# EUROPEAN PATENT APPLICATION

(11) **EP 4 697 012 A1**
(43) Date of publication of application: **18.02.2026**
(21) Application number: 25194824.6
(22) Date of filing: 08.08.2025
(51) Int. Cl.: G01N 21/03, G01N 21/85, G01N 21/05

(54) **PHOTOMETER DEVICE**

(30) Priority: 14.08.2024 CH 8542024
(71) Applicant: Sigrist - Photometer AG, 6373 Ennetbürgen (CH)
(72) Inventor: Flühler, Julian, 6373 Ennetbürgen (CH); Ferreiro, Jorge, 6373 Ennetbürgen (CH); Laibacher, Pascal, 6373 Ennetbürgen (CH)
(74) Representative: Rentsch Partner AG

(57) **Abstract**

Disclosed herein is a photometer device (1) comprising a measurement unit (2), a reflector unit (3) and a measurement cell (4) being arranged between the measurement unit (2) and the reflector unit (3), wherein: the reflector unit (3) comprises a reflector; the measurement cell (4) comprises a cell housing (6) which defines a measurement compartment, and a pipe inlet (8) and a pipe outlet which open into the measurement compartment and which are configured to be connected to a process pipe; the measurement unit 2 comprises a detector and a light source unit being configured to provide a light beam along a first light path from the measurement unit (2) through the measurement cell (4) and the measurement compartment into the reflector unit (3) and on the reflector; the reflector is configured such that the light beam being provided along the first light path is reflected along a second light path from the reflector through the measurement cell (4) into the measurement unit (2) and on the detector.

## Description

### Field of disclosure

The present disclosure lies in the field of optical measurements of fluids, in particular liquids or gases, in processes, in particular industrial processes, and relates to a photometer device as well as its use for optical measurements, in particular of liquids.

### Background, prior art

In many industrial processes using fluids, in particular liquid or gases, process control involves controlling optical parameters of the fluids, such as for example their color, turbidity or the concentration of a given substance dissolved, suspended or emulsified in the liquid. Typical industries which rely on such measurements are for example the chemical and pharmaceutical industry, refineries, for example oil refineries, or the beverage industry, such as spirituous beverages or beer. Such optical measurements may for example indicate that a certain chemical reaction occurred in an industrial chemical synthesis. For example, the occurrence of a precipitate or a color change may show that a certain reaction occurred or that a desired transformation failed. In the beverage industry, the color of certain spirituous beverages, such as brandy or whiskey, is a crucial quality parameter. The same holds true in beer brewing. In the latter case, also turbidity measurements are commonly performed because depending on the type of beer brewed, an increased turbidity or no turbidity at all may be desired. In oil refineries, crude oil is distilled in several stages. While the crude oil is typically black and turbid, certain desired fractions, such as gasoline or diesel are colorless or only slightly yellow and clear liquids.

While it is possible to periodically take samples of the process and measure them in a laboratory of a laboratory photometer (out of line measurement), it is in industrial processes typically desired to continuously monitor optical parameters. For this reason process photometers have been developed. Process photometers are devices which can be installed directly into the process line of a given industrial process (in-line measurement). Such photometers are therefore considered as in-line photometers. For example, such a device can be connected to a process pipe of an industrial process and at least a fraction of the fluid, in particular liquid or gas, may be sampled to the photometer. The photometer may then measure a given optical property of the fluid, in particular liquid or gas, in the process pipe. It is desirable to continuously monitor industrial process and ideally to do this 24 h a day, 7 days a week. To achieve this, the measurements should ideally be fully or at least mainly automatic.

A common problem with known photometers is that they have a relatively complex setup and are thus cumbersome to produce, assemble and service. Process photometers are external components which are often installed after the plant has been built. Typically, the available space at the desired installation location is highly limited. Importantly, the photometers must be arranged at specific locations, i.e. they must be accessible and visible. Additionally, their location is also determined by the process and equipment used. Common process photometers are often relatively large and bulky and have thus a relatively high installation space demand. The relatively large size of common process photometers requires for high process temperatures also a profounder cooling system to avoid temperature influences of the measurement and/or damages of the photometer. This results in turn in a more complex and costly manufacturing process. In addition, since in-line photometers are directly inserted into the process itself, they are a potential source of error for the process, such as leakage. Due to their setup, certain known photometers require short (i.e. < 0.5 m) electric cables to ensure communication between different parts. Such short cables are however disadvantageous, because they are prone to cable breaking as they are often installed under tension and such short cables also have been identified as a source of self-ignition, which is especially problematic in hazardous areas.

### Summary of disclosure

It is the general object of the present disclosure to advance the state of the art in the field of optical measurements of fluids, in particular liquids or gases, in processes and preferably to overcome one or more of the disadvantages mentioned above fully or at least partly. In advantageous embodiments, a photometer device is provided, which has a less complex setup, is easier and less expensive to manufacture, assemble and/or service. In some advantageous embodiments, a photometer is provided, which requires a smaller installation space as compared to other devices.

The general object is achieved by the subject-matter of the independent claims. Further advantageous embodiments follow from the dependent claims and the overall disclosure.

A first aspect of the disclosure relates to a photometer device, in particular a process photometer device. A second aspect of the disclosure relates to a process system which comprises such a photometer device. A third aspect of the present disclosure relates to the use of such a photometer device to measure an optical parameter of a fluid, in particular liquid or gas, in a process, respectively to a method for measuring an optical parameter of a fluid, in particular liquid or gas, in a process. A fourth aspect of the present disclosure relates to a kit of parts comprising a photometer device according to any of the embodiments described herein and one or more sets of distancing elements. A fifth aspect of the present disclosure relates to a kit of parts for assembling a photometer device. A sixth aspect of the present disclosure may relate to the use of a measurement unit and/or the use of a reflector unit for assembling a photometer device and/or in a photometer device.

The photometer device may be a process photometer device, respectively an in-line photometer device. As mentioned above, a process photometer device is configured to be installed directly into the process line, respectively a process pipe carrying a fluid, in particular liquid or gas, of an industrial process. The photometer device may in some embodiments comprise a measurement unit, a reflector unit and a measurement cell. The measurement cell may in some embodiments be arranged between, i.e. directly between, the measurement unit and the reflector unit. That is, the measurement cell may be sandwiched between the measurement unit and the reflector unit. In some embodiments, the measurement cell may be in direct contact with the measurement unit and with the reflector unit.

In some embodiments, the reflector unit may comprise a reflector, e.g. an optical reflector. The reflector may typically be configured to change the direction of an incoming light wave.

The measurement cell may in some embodiments comprise a cell housing. The cell housing may for example define, respectively delimt, a measurement compartment. The measurement compartment may be configured to accommodate a fluid, in particular liquid or gas, whose optical parameter shall be measured. The measurement cell may in some embodiments further comprise a pipe inlet and a pipe outlet which each open into the measurement compartment. The pipe inlet and the pipe outlet may be configured such that they can be connected to a process pipe, such as a process pipe of a process system in an industrial process. In some embodiments, the pipe inlet and the pipe outlet are openings, in particular only openings, in the cell housing. In some embodiments, the pipe inlet and the pipe outlet may each protrude from the cell housing. For example, it may be possible that the pipe inlet and the pipe outlet may each comprise a tube section being connected to the cell housing and opening into the measurement compartment. In some embodiments, the pipe inlet and the pipe outlet may each comprise a flange, which may particularly be connected to the tube section. Such a flange may in particular be arranged at a distal end of the tube section, while an opposing proximal end of the tube section may be in direct contact and/or connected to the cell housing. In some embodiments, the pipe inlet and the pipe outlet are oppositely arranged, e.g. the pipe inlet and the pipe outlet may be facing each other. The pipe inlet and the pipe outlet may be arranged at opposite sides of the cell housing.

In some embodiments, the measurement unit may comprise a detector. The detector may typically be configured to detect an incoming light beam, in particular with respect to the optical property or parameter with respect to which a fluid, in particular liquid or gas, shall be analyzed. In some embodiments, the measurement unit may comprise a light source unit. The light source unit may for example be configured to provide a light beam along a first light path from the measurement unit through the measurement cell (e.g. through the measurement compartment) into the reflector unit and on the reflector. Thus, the light beam is generated in the measurement unit and travels from there through the measurement cell from where it enters the reflector unit and hits the reflector.

In some embodiments, the reflector of the reflector unit may be configured such that the light beam being provided along the first light path is reflected along a second light path from the reflector through the measurement cell (e.g. through the measurement compartment) into the measurement unit and on the detector. In other words, the reflector is configured such that the light beam being provided along the first light path is reflected by the reflector back such that it travels a second time through the measurement cell (and the measurement compartment) and from there it reenters the measurement unit and is provided on the detector. The second light path is typically different from the first light path. In particular, the second light path may be offset to the first light path. In some embodiments, the light beam travels along the first light path and the second light path in different, in particular opposite directions. In some embodiments, the first light path and the second light path may be parallel to each other. The light beam may travel twice, in particular only twice, through the measurement cell, in particular the measurement compartment, on its way from the light source unit to the detector. The reflector unit allows to divide the optical path length, which allows to build the photometer device in a more compact and thus space saving manner without losing the ability to measure the optical parameters of the same substances. Furthermore, since both the light source unit and the detector are installed on the same side of the device and are both comprised in the measurement unit, the installation and service of the device is simplified. For example, to service both parts, a technician must only remove the measurement unit from the pipe system. The measurement cell and also the reflector unit can remain in place and are still mounted to the corresponding process pipes. Furthermore, since the detector and the light source unit are both comprised in the measurement unit and are thus both arranged on the same side of the photometer device, a cable which connects to opposing parts of the device (i.e. parts being present on two opposite sides of the measurement cell, respectively of the process pipe(s) to which the photometer device is mounted) is not necessary. Thereby, the overall setup of the device is simplified and it is possible to only use a single electronic access port to which a cable can be connected. Short cables are thus not necessary and the risk of self-ignition is reduced.

In some embodiments, the measurement unit may comprise a measurement unit housing. The measurement unit housing may encompass the detector and the light source unit. In some embodiments, the detector and the light source unit may be completely arranged inside the measurement unit housing. The measurement unit housing may (optionally together with the transparent window or glass pane of the measurement unit) form a closed compartment in which the detector and the light source unit may be arranged.

In some embodiments, the measurement unit may comprise a control unit. The control unit may for example comprise a circuit, such as a printed circuit board. The control unit may be configured to control the light source unit. The control unit may in some embodiments be configured to receive data, such as a measured signal, from the detector. The control unit may in some embodiments be completely arranged inside the measurement unit housing. In some embodiments, the measurement unit housing may encompass the control unit. The control unit may also be configured to control the checking unit described herein below. For example, the control unit may be configured to pivot the pivotable element between the first and the second position as described herein below.

In some embodiments, the reflector unit may comprise a reflector unit housing. The reflector unit housing may in some embodiments encompass the reflector. In some embodiments, the reflector may be completely arranged inside the reflector unit housing. The reflector unit housing may (optionally together with the transparent window or glass pane of the reflector unit) form a closed compartment in which the reflector unit may be arranged.

The reflector unit housing and/or the measurement unit housing and/or the cell housing may be made from metal, in particular steel, such as stainless steel, or from a polymer, such as a plastic.

In some embodiments, the measurement unit housing comprises a protruding portion. In some embodiments, this protruding portion (which may be referred to as the measurement unit housing protruding portion) may protrude from a base portion of the measurement unit housing. In some embodiments, this protruding portion may be at least partially inserted into the measurement cell, in particular into the cell housing. The protruding portion may therefore at least partially extend into the measurement cell, in particular into the cell housing. Thereby, the protruding portion may partially delimit, respectively define, the measurement compartment.

In some embodiments, the measurement cell comprises an opening through which the protruding portion of the measurement unit housing can be inserted into the measurement cell. This opening may be referred to as an opening for the measurement unit or as a first opening. It should be noted that this opening is different from the pipe inlet and pipe outlet. This opening may be an opening in the cell housing.

In some embodiments, the reflector unit housing comprises a protruding portion. In some embodiments, this protruding portion (which may be referred to as the reflector unit housing protruding portion) may protrude from a base portion of the reflector unit housing. The base portion of the reflector unit housing may for example be disk shaped and/or comprise a flange. In some embodiments, this protruding portion may be at least partially inserted into the measurement cell, in particular into the cell housing. The protruding portion may therefore at least partially extend into the measurement cell, in particular into the cell housing. Thereby, the protruding portion may partially delimit, respectively define, the measurement compartment.

In some embodiments, the measurement cell comprises an opening through which the protruding portion of the reflector unit housing can be inserted into the measurement cell. This opening may be referred to as an opening for the reflector unit or as a second opening. It should be noted that this opening is different from the pipe inlet and pipe outlet and also different from the opening for the measurement unit described above. This opening may be an opening, in particular another opening, in the cell housing.

In some embodiments, the protruding portion of the reflector unit housing and the protruding portion of the measurement unit housing may be inserted into the measurement cell, in particular the cell housing, from opposite sites (e.g. via the openings of the measurement cell discussed above). In some embodiments, the protruding portion of the reflector unit housing and the protruding portion of the measurement unit housing may face each other within the cell housing of the measurement cell. The opening for the measurement unit and the opening for the reflector unit may be oppositely arranged to each other. In some embodiments, the opening for the measurement unit and the opening for the reflector unit may arranged on opposite sides of the cell housing.

In some embodiments, the protruding portion of the measurement unit housing and the protruding portion of the reflector unit housing are oppositely arranged such that they define a gap within the measurement cell between them. It is understood that in the operational state, the fluid, in particular liquid or gas, whose optical property or parameter with respect to it shall be analyzed, flows through this gap. In some embodiments, the gap width, i.e. the distance between the protruding portion of the measurement unit housing and the protruding portion of the reflector unit housing is about 1 to about 300 mm, in particular about 3 mm to about 200 mm, more particular about 3 mm to about 160 mm.

In some embodiments, the pipe inlet and the pipe outlet are arranged on a first linear axis extending particularly through the center of the pipe inlet and the pipe outlet. In some embodiments, the opening for the measurement unit and the opening for the reflector unit may be arranged on a second linear axis extending particularly through the center of both openings. In some embodiments, the first linear axis and the second linear axis are essentially perpendicular to each other.

It is understood that a fluid, in particular liquid or gas, whose optical property or parameter with respect to it shall be analyzed, flows in the operational state from the pipe inlet to the pipe outlet and for example along the first linear axis. The first light path and the second light path may in particular be inclined to the first linear axis, for example essentially perpendicular thereto.

In some embodiments, the photometer device may comprise one or more distancing elements, such as distancing bolts or distancing plates.

Some or all of the distancing elements, in particular the distancing bolts, may be releasable, e.g. are releasably connected to the measurement cell, in particular the cell housing, and the reflector unit, in particular the reflector unit housing. Thus, these distancing elements may be arranged between the measurement cell and the reflector unit. A releasable distancing element, in particular a distancing bolt, means that the distancing element can be removed from the device without destroying the structural integrity of the parts and/or without using excessive forces. The distancing elements may for example be force locked and/or form locked to the cell housing and the reflector unit housing, for example by a thread connection or by clamping. In some embodiments, the distancing elements may be arranged between the cell housing and the reflector unit housing. The distancing elements may be connected to the cell housing and the reflector unit housing. Such distancing elements allow to fix a certain distance between the measurement cell and the reflector unit, respectively between the measurement unit and the reflector unit.

In general, the reflector unit and the measurement unit may in some embodiments be movable with respect to each other, in particular if the distancing elements, in particular the distancing bolts, are removed. It may for example be the case that the measurement unit and/or the reflector unit are movable such with respect to the measurement cell that the protruding portion of the reflector unit and/or the protruding portion of the measurement unit is/are moved further into or further out of the measurement cell, respectively the cell housing.

In general, the reflector unit and the measurement cell may in some embodiments be movable with respect to each other, in particular if the distancing elements, in particular the distancing bolts, are removed. It may for example be the case that the measurement cell and the reflector unit are movable to each other such that the protruding portion of the reflector unit is moved further into or further out of the measurement cell, respectively the cell housing. Thereby, the distance to the measurement unit, and in particular to the protruding portion of the measurement unit housing can be decreased or increased. In some embodiments, the measurement unit and the reflector unit are movable to each other along a linear path, in particular only along a linear path. The linear path may for example extend along the second linear axis. In embodiments with distancing elements, in particular the distancing bolts, the distancing elements fix or secure a specific distance. Changing the distance of the measurement unit and the reflector unit changes the optical path length of the light beam (respectively the gap width of the gap defined between the protruding portions of the measurement unit housing and the reflector unit housing) and/or the length of the first and second light path. Since the measurement of many optical parameters is dependent on the optical path length, the measurement can be influenced. Therefore, the photometer device can easily be adjusted to an optimal optical path length for an analyte of interest (see for example the Beer Lambert law). It is understood that the reflector unit may also be movable with respect to the measurement unit (and the measurement cell).

Some or all of the distancing elements, in particular the distancing bolts may be releasable, e.g. are releasably connected to the measurement cell, in particular the cell housing, and the measurement unit, in particular the measurement unit housing. Thus, these distancing elements may be arranged between the measurement cell and the measurement unit. The distancing elements may for example be force locked and/or form locked to the cell housing and the measurement unit housing, for example by a thread connection or by clamping. In some embodiments, the distancing elements may be arranged between the cell housing and the measurement unit housing. The distancing elements may be connected to the cell housing and the measurement unit housing. Such distancing elements allow to fix a certain distance between the measurement cell and the measurement unit, respectively between the measurement unit and the reflector unit.

In general, the measurement unit and the measurement cell may in some embodiments be movable with respect to each other, in particular if the distancing elements, in particular the distancing bolts, are removed. It may for example be the case that the measurement cell and the measurement unit are movable to each other such that the protruding portion of the measurement unit is moved further into or further out of the measurement cell, respectively the cell housing. Thereby, the distance to the reflector unit, and in particular to the protruding portion of the reflector unit housing can be decreased or increased. In some embodiments, the measurement unit and the reflector unit are movable to each other along a linear path, in particular only along a linear path.

In some embodiments, the measurement unit comprises a transparent window, for example a glass element. The transparent window may typically be configured to allow the light beam to pass there through. The glass element may be a glass pane, in particular a sapphire glass pane, through which the light beam travels, respectively extends, e.g. upon exiting or entering the measurement cell along the first or second light path. As understood by the skilled person, sapphire glass is made from aluminum oxide, such as by the Verneuil method. The transparent window may be disk shaped. In some embodiments, the glass pane may be a disk shaped glass, for example a disk shaped sapphire glass. This glass pane may be referred to as the measurement unit glass pane. The transparent window, e.g. the glass element, may in some embodiments face towards the reflector unit.

In some embodiments, the reflector unit comprises a transparent window, for example a glass element. The transparent window may typically be configured to allow the light beam to pass there through. The transparent window, e.g. the glass element, may be a glass pane, in particular a sapphire glass pane, through which the light beam travels, respectively extends, e.g. upon exiting or entering the measurement cell along the first or second light path. The transparent window may be disk shaped. In some embodiments, the glass pane may be a disk shaped glass, for example a disk shaped sapphire glass. This transparent window, e.g. the glass pane may be referred to as the reflector unit glass pane. The transparent window, e.g. the glass element, may in some embodiments face towards the measurement unit. The reflector may in particular be arranged behind the transparent window, e.g. the glass element, in particular such that no other element is arranged between the reflector and the transparent window, e.g. the glass element, of the reflector unit.

In some embodiments, the measuring unit housing may define, respectively delimit, a window opening, e.g. glass pane opening. In particular embodiments, the protruding portion of the measurement unit housing may define, respectively delimit, the window opening, e.g. glass pane opening. The transparent window, or the glass element (such as the glass pane) may be mounted within the window opening, e.g. glass pane opening. In certain embodiments, the measurement unit housing, in particular its protruding portion, may comprise a support ring which defines, respectively delimits, the glass pane opening. In some embodiments, the transparent window, or the glass pane is assembled into the window opening, e.g. glass pane opening, particularly such that a direct and fluid-tight connection is formed between the window opening, e.g. glass pane opening and the transparent window or the glass pane. A fluid-tight connection may for example mean that it passes the helium leakage test under vacuum (see for example DIN EN 1779:1999, in particular A3). Alternatively or additionally, no water may pass the connection at a pressure of 25 bar over 1 h at 25 °C.

In some embodiments, the reflector unit housing may define, respectively delimit, a window opening, e.g. glass pane opening. It is understood that this window opening, respectively glass pane opening, is different from the window opening, respectively glass pane opening, which may be part of the measuring unit housing. In particular embodiments, the protruding portion of the reflector unit housing may define, respectively delimit, the glass pane opening. The transparent window, or the glass element (such as the glass pane) may be mounted within the window opening, e.g. glass pane opening. In certain embodiments, the reflector unit housing, in particular its protruding portion, may comprise a support ring which defines, respectively delimits, the glass pane opening. In some embodiments, the transparent window, or the glass pane is assembled into the window opening, e.g. glass pane opening, particularly such that a direct and fluid-tight connection is formed between the window opening, e.g. glass pane opening, and the transparent window or the glass pane. Such embodiments are advantageous, because sealing rings and other sealing elements, for example made from resilient material, such as elastomers, are not necessary for tightening the connection between the transparent window or the glass panes and the respective glass pane openings. This increases the lifetime and decrease the service efforts because depending on the fluid, in particular liquid or gas, used, such sealing elements become brittle over time. Thus, in some embodiments, there is no external sealing element between the glass pane opening(s) and the transparent window or the glass element(s).

In some embodiments, the measurement cell and the reflector unit, and optionally also the measurement unit, are configured such that the measurement compartment is volume expandable. In some embodiments, the measurement cell and the reflector unit are configured such that a length of the first light path and/or a length of the second light path may adjustable. In some embodiments, the measurement cell and the reflector unit are configured such that the light beam's optical path length is adjustable. For example, as disclosed herein above, the reflector unit and the measurement cell can be movable relative to each other. Thereby, the volume of the measurement compartment, the optical path length and/or the length of the first and second path may be increased or decreased.

In some embodiments, the reflector unit, and optionally also the measurement cell, is devoid of electronic elements. In some embodiments, all electronic elements of the photometer device, such as for example the light source unit, the detector, the control unit, circuits, electronic access ports, etc., are comprised in the measurement unit and in particular inside the measurement unit housing. Thus, in some embodiments, the measurement unit may be an active unit. That is a unit in which electronic elements are arranged and/or in which an electric current flows during operation. In contrast, the reflector unit and optionally the measurement cell may each be a passive unit. That is a unit without electronic elements and/or in which no electric current flows during operation.

In some embodiments, the reflector is a retroreflector. The retroreflector may be configured to reflect the light beam such that the second light path is essentially parallel to the first light path. Although it may in some embodiments be possible to use two mirrors or a prism as the reflector, it has been found that a retroreflector provides a much higher accuracy for reflecting the light beam. Therefore the accuracy of the measurement result is improved. In some embodiments, the light beam is reflected 3 times at the retroreflector, i.e. at 3 different locations of the retroreflector.

In some embodiments, the light source unit may comprise one or more light sources, such as LEDs, in particular SMD LEDs (surface-mounted device LEDs). The light beam may typically be a collimated beam and/or may be monochromatic. Typically, the light beam may have a wavelength of about 200 to 1000 nm, in particular about 250 nm to 900 nm.

The light beam may in some embodiments have a cross-sectional area of about 10 to 500 mm², in particular of about 40 to 400 mm², more particular of about 50 to 350 mm². In some embodiments, the light beam may have a circular cross section with a diameter of 1 to 20 mm, in particular 4 to 10 mm.

In some embodiments, the optical path length of the light beam, i.e. the distance the light beam travels through the measurement compartment, is about 1 to about 300 mm, in particular about 3 mm to about 200 mm, more particular about 3 mm to about 160 mm. It is understood that the optical path length is the sum of the distance the light beam travels through the measurement compartment along the first light path and the of the distance the light beam travels through the measurement compartment along the second light path.

In some embodiments, the light source unit comprises a plurality of light sources, for example different light sources. Each of these light sources may be configured to provide a light beam. The light beams of the light sources may in particular be configured to merge. In some embodiments, the light beams may each be provided along the first light path. This may for example be possible by using reflectors in the light source unit, such as mirrors and/or beamsplitters, which deflect the individual light beams such that they merge and/or such that they are provided along the first light path. In some embodiments, the light source unit comprises at least one optical filter per light source being associated with the corresponding light source. This means, that the optical filter is configured such that a light beam being emitted from the corresponding light source passes the corresponding optical filter. The optical filter(s) may be configured such that they let only light of a predefined wavelength pass there through. For example, the optical filter(s) may have a band width of about 50 nm or less, in particular of about 20 nm or less, more particular of about 10 nm or less. Typically, if multiple light sources are used the optical filter being associated with the light sources are different, in particular with respect to the wavelength of the light they allow to pass. Thus, it is for example possible that one light source / optical filter pair generates a light beam with a wavelength of 350 nm, while another light source / optical filter pair generates a light beam with a wavelength of 700 nm. If no optical filters are used, the light sources may differ in terms of the wavelength of the light beam they emit.

In embodiments with multiple light sources, the optical filters may be arranged directly in front of the corresponding light source. Typically every light source is associated with one, in particular only one, different optical filter. Being able to change the wavelength of the light beam being provided along the first light path from the measurement unit through the measurement cell into the reflector unit and on the reflector allows a more accurate measurement. This is for example because at certain wavelengths there may be a significant scattering effect and absorption effect, while at another wavelength there may be only a scattering effect and no significant absorption. Performing then two measurements sequentially allows to correct the scattering observed.

In some embodiments, the light source unit may be configured such that the plurality of light sources provide their light beam sequentially. In embodiments with a control unit, the control unit may control the duration of each light beam and/or the sequence in which the light sources provide their light beams. In certain embodiments, the one or more light beams are provided until a threshold light energy has reached the detector. For example, a threshold light energy may be predefined in the control unit. The control unit may be configured to switch off a given light source when the corresponding threshold light energy is received at the detector. Optionally, the control unit may thereafter switch on another given light source, in particular again until the predefined threshold light energy is received.

In some embodiments, the measurement unit comprises a checking unit. The checking unit may in particular be configured such that the light beam is optically influenced by the checking unit in a predefined manner. For example, the intensity of the light beam may be reduced by a predefined amount by the checking unit. This may for example be achieved by scattering or absorbing a predefined amount of the light beam by the checking unit. Such a checking unit allows a user to check whether the photometer device works properly. As the optical influence, such as a decrease of intensity, of the light beam by the checking unit is predefined and known, a user can check whether the photometer device works properly. In some embodiments, the checking unit may comprise a predefined optical obstacle being configured to be movable into and out of the light beam provided by the light source unit. The optical obstacle may for example be configured to decrease the intensity of the light beam in a predefined manner. It is understood that if the light source unit comprises a plurality of light sources, at least one light beam provided by at least one of the light sources can be optically influenced by the obstacle element. The checking unit may in particular be comprised by the measurement unit and in particular by the light source unit. For example, the measurement unit may be arranged in front of the light source, respectively of one of the light sources.

In some embodiments the predefined optical obstacle is mounted on a pivotable carrier. The pivotable carrier may be configured to be pivoted between a first position and a second position. In the first position, the predefined optical obstacle may be arranged in the light beam provided by the light source unit (i.e. such that the light beam travels through the optical obstacle element. In the second position the predefined optical obstacle may not be arranged in the light beam (i.e. it may be arranged such that the light beam does not travel through the optical obstacle element and/or such that the light beam bypasses the optical obstacle element).

In some embodiments, the measurement unit may comprise a cooling unit. The cooling unit may for example comprise a cooling duct which is configured to accommodate a cooling fluid. The cooling unit may further comprise a cooling fluid inlet opening into the cooling duct and a cooling fluid outlet opening into the cooling duct. In some embodiments, the cooling duct may be a ring duct. The cooling unit may be configured to cool the measurement unit and in particular the light source unit and/or the detector. In some embodiments, the cooling duct circumferentially surrounds the light source unit and/or the detector. That is, in the operative state, the cooling fluid may flow radially around the light source unit and/or the detector.

In some embodiments, the photometer device has one or more electronic access ports, but particularly all electronic access ports are only comprised in the measurement unit (and thus not in the measurement cell or reflector unit). In some embodiments, the photometer device has at least one electronic access port or even only a single electronic access port. An electronic access port is an electronic interface for connecting the photometer device with external electronic devices and/or for supplying the photometer device with electrical power. The electronic access port may in particular be located at, respectively by comprised by, the measurement unit.

In some embodiments, there is no cable and/or nor electronic connection between the measurement unit and the reflector unit.

In some embodiments, the reflector unit may comprise a reflector support. The reflector may for example be mounted to the reflector support. In some embodiments, the reflector support is arranged inside the reflector unit housing. The reflector support may for example comprise a reflector accommodation compartment within which the reflector is mounted. In embodiments in which the reflector unit housing comprises a base portion, the base portion may comprise a lid covering an opening. The reflector support may be removable from the reflector unit housing via this opening. This opening may typically face away from the measurement unit and the measurement cell. The reflector accommodation compartment may for example be a recess formed by the reflector support.

In some embodiments, the photometer device may comprise a control unit. The control unit may for example be configured to store data received from the detector and/or to provide data from the detector to a display unit.

In some embodiments, the photometer device, in particular the measurement unit, may comprise a display unit comprising a display which is configured to display data to a user. In some embodiments, the display unit is a read-only display unit. That is, a user can receive outputted data from the display unit, e.g. by visual means, but the user cannot input data via the display unit.

In some embodiments, the measurement unit may comprise, in particular consist of, two parts being connected to each other, namely a front part and a back part. The display unit may in some embodiments be comprised in the front part. The detector and the light source unit may in some embodiments be comprised in the back part. In some embodiments, the front part and the back part are not integral but are separate parts being for example connected together by a form-locking and/or force locking connection, such as a threading connection or a clamping connection.

It is generally understood herein that the term "comprising" is interpreted as meaning that it includes those features following this term, but that it does not exclude the presence of other features, as long as they do not render the matter unworkable. On the other hand, if the wording "consist of" is used, then no further features are present apart from the ones following said wording.

In some embodiments, the measurement unit comprises an interface being configured for data exchange, in particular wireless data exchange, with an external communication device, in particular between the control unit and the external communication device. The interface may be configured such that data can be inputted by a user from the external communication device into the control unit and optionally also such that data can be outputted from the control unit to the external communication device by the user. The external communication device may in particular be a cell phone.

In some embodiments, the display unit may be configured to display an identification code, such a QR code which can be read by the external communication device of a user to directly establish a connection between the photometer device and the external communication device via the interface.

The process system according to a second aspect of the present disclosure may comprise the photometer device according to any of the embodiments described herein. Furthermore, the process system may comprise a first process pipe and a second process pipe. The first process pipe may be connected to the pipe inlet of the cell housing and the second process pipe may be connected to the pipe outlet of the cell housing. The first and second process pipe may for example be pipes of a chemical plant, a pharmaceutical plant, a refinery, a brewery or a distillery. The first and second process pipe may both be configured for transporting a fluid, in particular liquid or gas.

The use of a photometer device according to the third aspect of the present disclosure involves the use of a photometer device according to any of the embodiments described herein for measuring in particular continuously measuring, an optical parameter of a fluid, in particular liquid, in a process. The use may be considered as a method for measuring an optical parameter of a fluid, in particular liquid or gas, in a process, in particular an industrial process. The measurement may be an in-line measurement. In some embodiments, the photometer device may be connected into a process pipe via its pipe inlet and pipe outlet. The fluid, in particular liquid or gas, to be analyzed flows continuously from the pipe inlet through the measurement compartment of the measurement cell to the pipe outlet. Since the pipe inlet and the pipe outlet are connected to the process pipe, the fluid, in particular liquid or gas, continuously flows through the measurement compartment.

Measuring the optical parameter may comprise the steps of: (a) transmitting the light beam from light source unit through the measurement cell (e.g. through the measurement compartment) into the reflector unit onto the reflector along the first light path; (b) reflecting the light beam at the reflector along the second light path from the reflector through the measurement cell (e.g. through the measurement compartment) into the measurement unit and on the detector; (c) detecting the light beam, in particular its intensity, at the detector. In some embodiments, the ratio of the intensity I₁ of the light beam at the detector and the intensity I₀ being initially provided by the light source unit before traveling through the measurement cell (e.g. the measurement compartment) is determined. It is understood that the first and second light path extend through the fluid, in particular liquid or gas, flowing continuously from the pipe inlet through the measurement compartment of the measurement cell to the pipe outlet. In some embodiments, the fluid, in particular liquid or gas, to be analyzed flows essentially perpendicularly to the first light path and second light path.

A fourth aspect of the present disclosure may relate to a kit of parts comprising a photometer device according to any of the embodiments described herein and one or more sets of distancing elements, in particular the distancing bolts. Each set of distancing elements may comprise one or more distancing elements. If the set comprises multiple distancing elements each distancing element of the corresponding set has the same length. The distancing elements of different sets have typically different lengths.

A fifth aspect of the present disclosure relates to another kit of parts, namely a kit of parts for assembling a photometer device according to any of the embodiments described herein, in particular with respect to the first aspect. The kit of parts may comprise a reflector unit as described in any of the embodiments herein. Such a reflector unit may for example have a reflector. The kit of parts may further comprise a measurement unit, e.g. a measurement unit as described in any of the embodiments herein, in particular with respect to the first aspect. The measurement unit may for example comprise a detector and a light source unit, which is configured to provide in an assembled state of the photometer device a light beam along a first light path from the measurement unit through a measurement compartment into the reflector unit and on the reflector. The measurement compartment may be defined by a cell housing of a measurement cell. The assembled state may for example relate to the photometer device described in any of the embodiments of the photometer device herein, in particular with respect to the first aspect. The reflector may be configured such that the light beam being in the assembled state of the photometer device provided along the first light path is in the assembled state of the photometer device reflected along a second light path from the reflector through the measurement cell into the measurement unit and on the detector. The measurement cell may typically not be part of the kit of parts.

A sixth aspect of the present disclosure may relate to the use of a measurement unit (such as a measurement unit as described in any of the embodiments herein, in particular with respect to the first aspect) and/or the use of a reflector unit (such as the reflector unit as described in any of the embodiments herein, in particular with respect to the first aspect) for assembling a photometer device and/or in a photometer device. The photometer device may be a photometer device as described in any of the embodiments herein. The measurement unit may comprise a detector and a light source unit being configured to provide a light beam along a first light path from the measurement unit through the measurement cell of the photometer device and the measurement compartment into the reflector unit of the photometer device and on the reflector. The reflector unit may comprise a reflector. The reflector may be configured such that the light beam being in the assembled state of the photometer device provided along the first light path is in the assembled state of the photometer device reflected along a second light path from the reflector through the measurement cell into the measurement unit and on the detector.

The following non-limiting examples relate also to aspects of the present disclosure:
A 1. example relates to a photometer device, in particular a process photometer device, comprising a measurement unit, a reflector unit and a measurement cell being arranged between the measurement unit and the reflector unit, wherein: a. the reflector unit comprises a reflector; b. the measurement cell comprises a cell housing which defines a measurement compartment, and a pipe inlet and a pipe outlet which open into the measurement compartment and which are configured to be connected to a process pipe; c. the measurement unit comprises a detector and a light source unit being configured to provide a light beam along a first light path from the measurement unit through the measurement cell and the measurement compartment into the reflector unit and on the reflector; d. the reflector is configured such that the light beam being provided along the first light path is reflected along a second light path from the reflector through the measurement cell into the measurement unit and on the detector.
A 2. example relates to the photometer device according to the 1. example, wherein the measurement unit comprises a measurement unit housing and/or wherein the reflector unit comprises a reflector unit housing.
A 3. example relates to the photometer device according to the 2. example, wherein the measurement unit housing comprises a protruding portion which is at least partially inserted into the measurement cell.
A 4. example relates to the photometer device according to the 2. or 3. example, wherein the reflector unit housing comprises a protruding portion which is at least partially inserted into the measurement cell.
A 5. example relates to the photometer device according to the 3. or 4. example, wherein the protruding portion of the measurement unit housing and the protruding portion of the reflector unit housing are oppositely arranged such that they define a gap within the measurement cell between them.
A 6. example relates to the photometer device according to the 4. or 5. example, wherein distancing elements, such as distancing bolts, in particular releasable distancing bolts, are arranged between the cell housing and the reflector unit housing.
A 7. example relates to the photometer device according to any of the previous examples, wherein the measurement unit comprises a transparent window, such as a glass pane, through which the light beam travels between the measurement unit and the measurement compartment; and/or wherein the reflector unit comprises a transparent window, such as a glass pane, through which the light beam travels between the measurement compartment and the reflector unit.
An 8. example relates to the photometer device according to any of the previous examples, wherein the measurement cell, the measurement unit and the reflector unit are configured such that the measurement compartment is volume expandable and/or such that a length of the first light path and a length of the second light path is adjustable.
A 9. example relates to the photometer device according to any of the previous examples, wherein the reflector unit and optionally the measurement cell is devoid of electronic elements.
A 10. example relates to the photometer device according to any of the previous examples, wherein the reflector is a retroreflector being particularly configured to reflect the light beam such that the second light path is parallel to the first light path.
An 11. example relates to the photometer device according to any of the previous examples, wherein the light source unit comprises a plurality of light sources, which are each configured to provide a light beam, wherein the light beams of the light sources merge and/or are each provided along the first light path.
A 12. example relates to the photometer device according to the 11. example, wherein the light source unit is configured such that the plurality of light sources provide their light beam sequentially.
A 13. example relates to the photometer device according to any of the previous examples, wherein the measurement unit comprises a checking unit, wherein the checking unit comprises a predefined optical obstacle being configured to be movable into and out of the light beam provided by the light source unit.
A 14. example relates to the photometer device according to the 13. example, wherein the predefined optical obstacle is mounted on a pivotable carrier which can be pivoted between a first position in which the predefined optical obstacle is arranged in the light beam provided by the light source unit and a second position in which the predefined optical obstacle is not arranged in the light beam provided by the light source unit.
A 15. example relates to the photometer device according to any of the previous examples, wherein the measurement unit comprises a cooling unit which comprises a cooling duct being configured to accommodate a cooling fluid, a cooling fluid inlet opening into the cooling duct and a cooling fluid outlet opening into the cooling duct.
A 16. example relates to the photometer device according to the 15. example, wherein the cooling duct circumferentially surrounds the light source unit.
A 17. example relates to the photometer device according to any of the previous examples, wherein the photometer device has at least one, in particular only a single, electronic access port, wherein the electronic access port is comprised by the measurement unit.
An 18. example relates to the photometer device according to any of the previous examples, wherein the measurement unit comprises a control unit being configured to store data received from the detector and/or to provide data from the detector to a display unit.
A 19. example relates to the photometer device according to any of the previous examples, wherein the measurement unit comprises an interface being configured for wireless data exchange with an external communication device.
A 20. example relates to a process system comprising the photometer device according to any of the previous examples, a first process pipe and a second process pipe, wherein the first process pipe is connected to the pipe inlet of the cell housing and the second process pipe is connected to the pipe outlet of the cell housing.
A 21. example relates to a use of a photometer device according to any of the 1. to 19. examples to measure, in particular continuously measure, an optical parameter of a fluid, in particular liquid or gas , in a process.
A 22. example relates to a kit of parts for assembling a photometer device according to any of the 1. to 19. examples, the kit comprising a measurement unit and a reflector unit, wherein a. the reflector unit comprises a reflector; b. the measurement unit comprises a detector and a light source unit being configured to provide in an assembled state of the photometer device a light beam along a first light path from the measurement unit through a measurement compartment which is defined by a cell housing of a measurement cell into the reflector unit and on the reflector; c. the reflector is configured such that the light beam being in the assembled state of the photometer device provided along the first light path is in the assembled state of the photometer device reflected along a second light path from the reflector through the measurement cell into the measurement unit and on the detector. A 23. example relates to a use of a measurement unit in a photometer device according to any of the 1. to 19. examples, wherein the measurement unit comprises a detector and a light source unit being configured to provide in an assembled state of the photometer device a light beam along a first light path from the measurement unit through a measurement compartment which is defined by a cell housing of a measurement cell into the reflector unit and on the reflector.
A 24. example relates to a use of a reflector unit in a photometer device according to any of the 1. to 19. examples, wherein the reflector unit comprises a reflector, wherein the reflector is configured such that the light beam being in the assembled state of the photometer device provided along the first light path is in the assembled state of the photometer device reflected along a second light path from the reflector through the measurement cell into the measurement unit and on the detector.

### Brief description of the figures

The herein described invention will be more fully understood from the detailed description given herein below and the accompanying drawings which should not be considered limiting to the invention described in the appended claims. The drawings are showing:
- Fig. 1: a perspective view of a photometer device according to an embodiment of the disclosure;
- Fig. 2: a sectional view of the photometer device shown in Fig. 1;
- Fig. 3: an exploded view of the photometer device shown in Fig. 1;
- Fig. 4: a perspective view of a photometer device according to another embodiment of the disclosure;
- Fig. 5: a sectional view of the photometer device shown in Fig. 4;
- Fig. 6: a light source unit as it can be used in some embodiments of the present disclosure;
- Fig. 7: a sectional view of a reflector unit as it can be used in some embodiments of the present disclosure.

### Exemplary embodiments

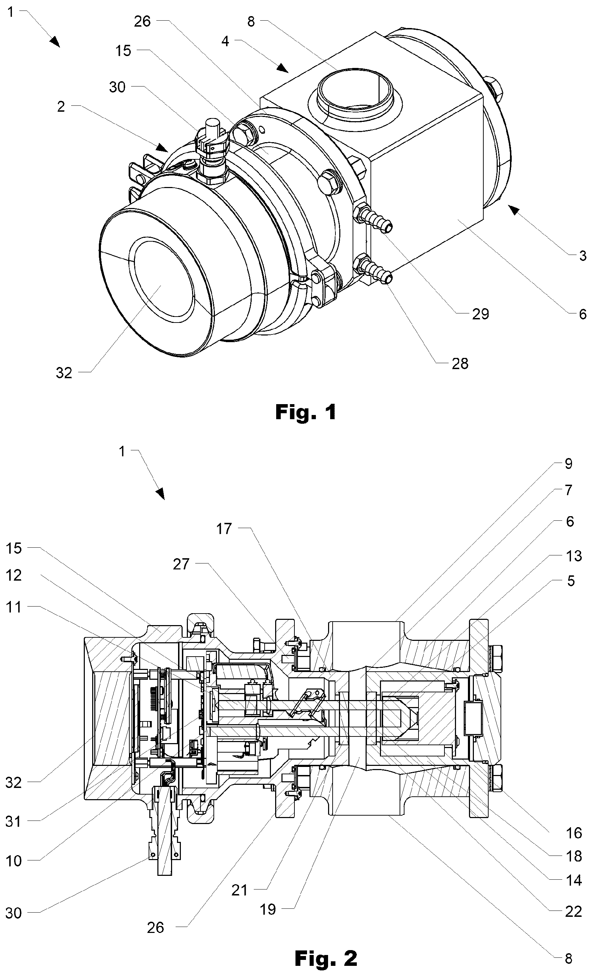

Fig. 1 shows a perspective view of a photometer device 1 and Fig. 2 a sectional view of the same photometer device 1. It comprises a measurement unit 2, a cuboid measurement cell 4 and a reflector unit 3. It can be seen that the measurement cell 4 is sandwiched between measurement unit 2 and reflector unit 3. Measurement cell 4 comprises a cell housing 6 which defines a measurement compartment 7. Furthermore, the measurement cell has a pipe inlet 8 and an oppositely arranged pipe outlet 9 which can both be connected to a process pipe carrying the fluid, in particular liquid or gas, whose optical parameter may be measured. Measurement unit 2 comprises a detector 10 and a light source unit 11. Light source unit 11 is configured such that it generates light beam 12 along first light path 13. Light beam 12 travels from light source unit 11 via a glass pane 21 of measurement unit 2 into measurement compartment 7 and exits the latter by passing through glass pane 22 of reflector unit 3 to enter the reflector unit and to be provided onto reflector 5. The reflector 5 is configured such that light beam 12 is reflected along second light path 14 back into measurement unit 2. That is, light beam 12 exits reflector unit 3 via its glass pane 22 and enters thereupon again measurement compartment 7. It then exits measurement compartment 7 via glass pane 21 of measurement unit 2 to enter measurement unit 2 where it is provided onto detector 10. Since the measurement compartment is filled with the fluid, in particular liquid or gas, to be analyzed, light beam 12 passes the fluid, in particular liquid or gas, to be analyzed therefore twice.

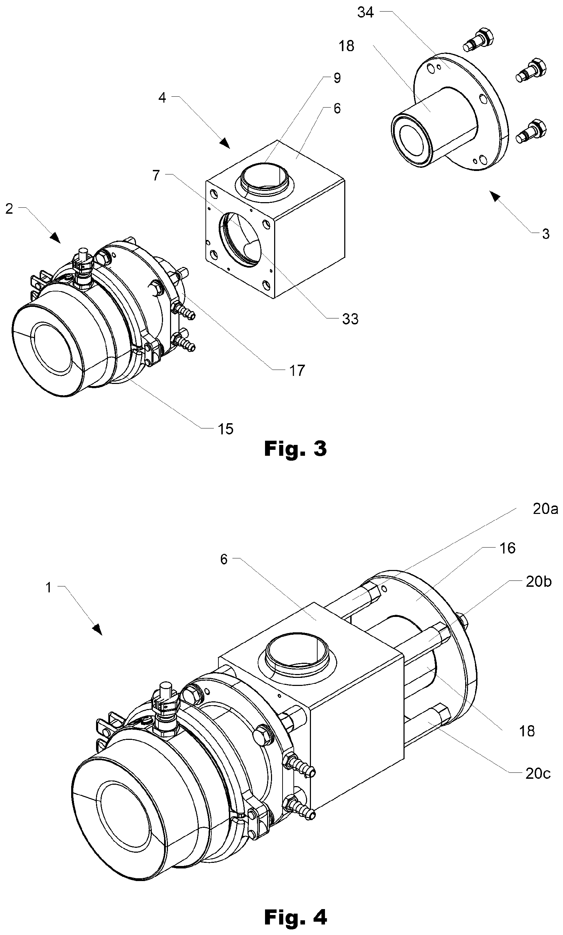

Measurement unit 2 comprises measurement unit housing 15 and reflector unit 3 comprises reflector unit housing 16. The measurement unit housing 15 comprises protruding portion 17 which extends into measurement cell 4 via a corresponding opening (see Fig. 3). Vice versa, also reflector unit housing 16 comprises a protruding portion 18 which also extends into measurement cell 4 via another opening. It can be seen that these two protruding portions 17 and 18 are facing each other and are arranged such that the define gap 19 between them. The fluid, in particular liquid or gas, to be analyzed therefore flows through gap 19 and the light beam travels twice through this gap, e.g. along first light path 13 and along second light path 14. The first and second light path are parallel and offset to each other. Both the measurement unit housing and the reflector unit housing comprise a glass pane 21 and 22 being assembled into a glass pane opening of the corresponding housing. In general, the light beam travels twice through each of these two glass panes 21 and 22. It can further be seen that the two glass panes 21 and 22 are facing towards each other.

Measurement unit 2 also comprises cooling unit 26 with cooling duct 27 extending circumferentially around light source unit 11. Cooling unit 26 additionally comprises a cooling fluid inlet 28 and a cooling fluid outlet 29 which both open into cooling duct 27. The sole electronic access port of photometer device 1 is electronic access port 30 being part of measurement unit 2. Both measurement cell 4 and reflector unit 3 are passive units being devoid of any electronic elements. Measurement unit 2 comprises further control unit 31 and a display unit 32. Control unit 31 may in general for example be configured to receive and/or store data from detector 10. Furthermore, control unit 31 may be configured to provide such data to display unit 32 which may display this data to a user via its display.

Fig. 3 shows an exploded view of photometer 1 of Fig. 1 and 2. In this illustration, measurement unit 2, reflector unit 3 and measurement cell 4 are shown separately. Here it can be seen that measurement unit housing 15 comprises protruding portion 17 which extends into measurement cell 4 via its opening 33. Cell housing 6 of measurement cell 4 defines the measurement compartment 7. Oppositely arranged to opening 33 is another opening (not visible) of measurement cell 4 through which protruding portion 18 of reflector unit housing 16 extends into measurement cell 4. It can further be seen that these two openings of the measurement cell 4 through which the protruding portions 17 and 18 of the measurement unit 2 and reflector unit 3 extend into measurement cell 4 are arranged on a common linear second axis. This second linear axis may in general for example be parallel to the first and second light paths 13 and 14. Furthermore, the pipe inlet 8 and the pipe inlet 9 (respectively their centers) are arranged on a first linear axis which is essentially perpendicular to the second linear axis.

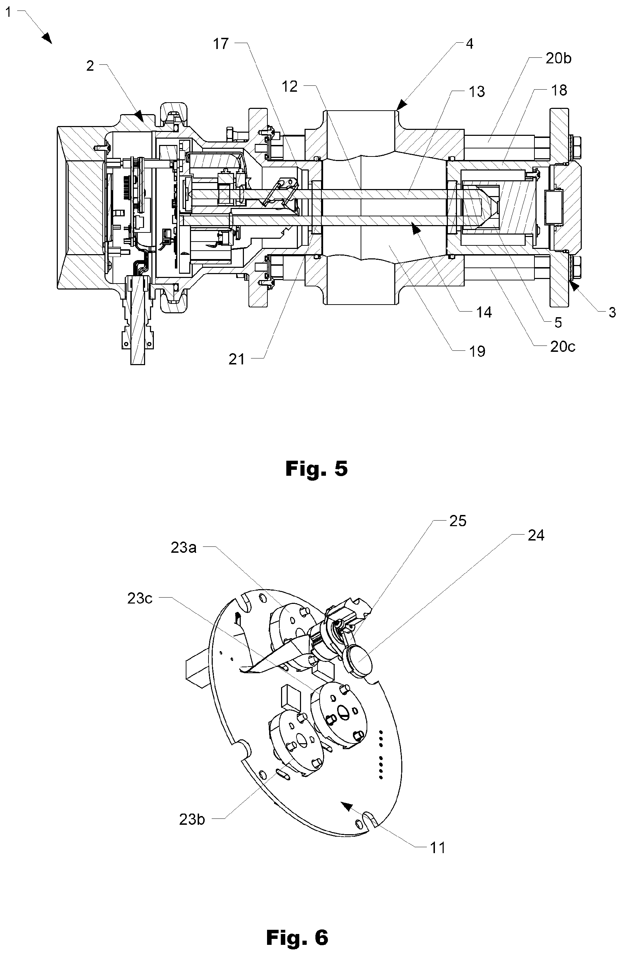

Fig. 4 and 5 show a photometer device 1 according to another embodiment of the disclosure. In contrast to the embodiment shown in Fig. 1 to 3, photometer device 1 comprises releasable distancing bolts 20a, 20b and 20c (a fourth distancing bolt is not visible in this view). These distancing bolts are connected, in particular screwed, to cell housing 6 and reflector unit housing 16. The distancing bolts ensure that a selected gap width of gap 19, respectively a selected distance between measurement cell 4 and reflector unit 3 is maintained and/or locked. From the sectional view of Fig. 5 it is visible that the measurement cell 4 and the reflector unit 3 are configured such that the measurement compartment 7 is volume expandable and/or such that a length of the first light path 13 and a length of the second light path 14 is adjustable. Reflector unit 3 and measurement cell 4 can be movable towards each other when distancing bolts 20a, 20b and 20c are removed. Accordingly, when the distancing bolts are mounted as shown in Fig. 4, movement of reflector unit 3 relative to measurement cell 4 is prevented. Since the measurement unit housing 15, respectively its protruding portion 17, and the reflector unit housing 16, respectively its protruding portion 18 define gap 19 between them, moving the reflector unit 3 relative to the measurement cell 4 increases or decreases the gap width of gap 19. Thereby, the volume of measurement compartment 7 and the optical path length of light beam 12 increases or decreases. Therefore, the photometer device can be readily adjusted to a specific desired path length. If one compares the embodiment shown in Fig. 5 with the embodiment shown in Fig. 2, it can be seen that the gap width of gap 19 is much larger in the embodiment of Fig. 5 as compared to the gap width of the embodiment shown in Fig. 2.

Fig. 6 shows in detail a measurement unit 2, however most parts have been removed to illustrate details of light source unit 11. It can be seen that in this embodiment, light source unit 11 comprises three light sources 23a, 23b and 23c. All these light sources (and/or the mirrors and/or beamsplitters discussed below) are configured to provide a light beam along first light path 13. This can for example be achieved by a plurality of reflectors, such as mirrors and/or beamsplitters. By using different optical filters being associated with the corresponding light source, it is possible to provide different light beams, i.e. light beams with different wavelengths, from each light source / optical filter pair. Furthermore, it can be seen that the measurement unit comprises a checking unit with optical obstacle 24 being mounted on pivotable carrier 25. When a user wants to test whether the photometer device is running correctly, pivotable carrier 25 can be pivoted into a first position in which optical obstacle 24 is arranged in the light beam and in which the light beam travels through the optical obstacle. When the test is over, the pivotable element can be pivoted from the first position into a second position being different from the first position in which the obstacle element is not arranged in the light beam and/or in which the light bypasses the optical obstacle element and does therefore not extend there through.

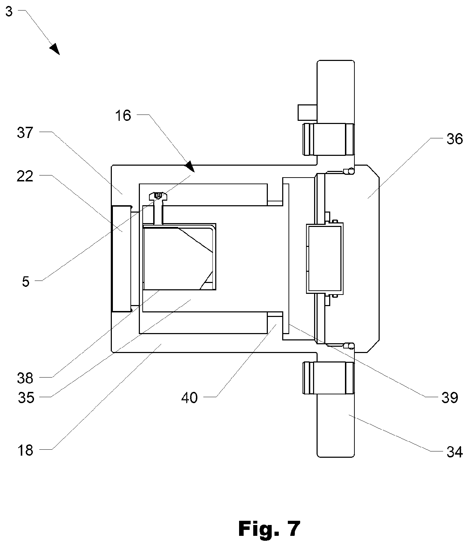

Fig. 7 shows a sectional view of a reflector unit 3 as it can be used in certain embodiments of the photometer device according to the disclosure. As already mentioned above, reflector unit 3 may comprise reflector unit housing 16 with protruding portion 18 and base portion / flange 34 from which it protrudes. Reflector unit 3 comprises also reflector support 35 which supports reflector 5. It can be seen that reflector support 35 defines, respectively comprises, reflector accommodation compartment 38 within which reflector 5 may be accommodated. Reflector accommodation compartment 38 is open to one side, i.e. towards glass pane 22. Glass pane 22 is assembled into a glass pane opening being delimited by support ring 37 of reflector unit housing 16. Reflector unit 3 further comprises lid 36 which covers an opening facing in the mounted state away from the measurement unit and measurement cell. Reflector support 35 may be removable from reflector unit 3 via this opening. Furthermore, flange 39 of reflector support 35 may form a form-locking engagement with rib 40 to prevent movement towards glass pane 22, respectively towards the measurement cell and the measurement unit.

### List of designations

- 1: Photometer device
- 2: Measurement unit
- 3: Reflector unit
- 4: Measurement cell
- 5: Reflector
- 6: Cell housing
- 7: Measurement compartment
- 8: Pipe inlet
- 9: Pipe outlet
- 10: Detector
- 11: Light source unit
- 12: Light beam
- 13: First light path
- 14: Second light path
- 15: Measurement unit housing
- 16: Reflector unit housing
- 17: Protruding portion of measurement unit housing
- 18: Protruding portion of reflector unit housing
- 19: Gap
- 20a-c: Distancing bolts
- 21: Glass pane of measurement unit
- 22: Glass pane of reflector unit
- 23a-c: Light sources
- 24: Optical obstacle
- 25: Pivotable carrier
- 26: Cooling unit
- 27: Cooling duct
- 28: Cooling fluid inlet opening
- 29: Cooling fluid outlet opening
- 30: Electronic access port
- 31: Control unit
- 32: Display unit
- 33: Opening for the measurement unit
- 34: Base portion of reflector unit housing
- 35: Reflector support
- 36: Lid
- 37: Support ring
- 38: Reflector accommodation compartment
- 39: Flange
- 40: Rib

## Claims

1. Photometer device (1), in particular a process photometer device, comprising a measurement unit (2), a reflector unit (3) and a measurement cell (4) being arranged between the measurement unit (2) and the reflector unit (3), wherein:
a. the reflector unit (3) comprises a reflector (5);
b. the measurement cell (4) comprises a cell housing (6) which defines a measurement compartment (7), and a pipe inlet (8) and a pipe outlet (9) which open into the measurement compartment (7) and which are configured to be connected to a process pipe;
c. the measurement unit (2) comprises a detector (10) and a light source unit (11) being configured to provide a light beam (12) along a first light path (13) from the measurement unit (2) through the measurement cell (4) and the measurement compartment (7) into the reflector unit (3) and on the reflector (5);
d. the reflector (5) is configured such that the light beam (12) being provided along the first light path (13) is reflected along a second light path (14) from the reflector (5) through the measurement cell (4) into the measurement unit (2) and on the detector (10).

2. The photometer device (1) according to claim 1, wherein the measurement unit (2) comprises a measurement unit housing (15), wherein preferably the measurement unit housing (15) comprises a protruding portion (17) which is at least partially inserted into the measurement cell (4); and/or wherein the reflector unit (3) comprises a reflector unit housing (16), wherein preferably the reflector unit housing (16) comprises a protruding portion (18) which is at least partially inserted into the measurement cell (4).

3. The photometer device (1) according to any of the previous claims, wherein the measurement cell (4), the measurement unit (2) and the reflector unit (3) are configured such that the measurement compartment (7) is volume expandable and/or such that a length of the first light path (13) and a length of the second light path (14) is adjustable.

4. The photometer device (1) according to any of the previous claims, wherein the reflector unit (3) and optionally the measurement cell (4) is devoid of electronic elements.

5. The photometer device (1) according to any of the previous claims, wherein the reflector (5) is a retroreflector being particularly configured to reflect the light beam (12) such that the second light path (14) is parallel to the first light path (13).

6. The photometer device (1) according to any of the previous claims, wherein the light source unit (11) comprises a plurality of light sources (23a, 23b, 23c), which are each configured to provide a light beam (12), wherein the light beams (12) of the light sources (23a, 23b, 23c) merge and/or are each provided along the first light path (13), wherein preferably the light source unit (11) is configured such that the plurality of light sources (23a, 23b, 23c) provide their light beam (12) sequentially.

7. The photometer device (1) according to any of the previous claims, wherein the measurement unit (2) comprises a checking unit, wherein the checking unit comprises a predefined optical obstacle (24) being configured to be movable into and out of the light beam (12) provided by the light source unit (11).

8. The photometer device according to claim 7, wherein the predefined optical obstacle (24) is mounted on a pivotable carrier (25) which can be pivoted between a first position in which the predefined optical obstacle (24) is arranged in the light beam (12) provided by the light source unit (11) and a second position in which the predefined optical obstacle (24) is not arranged in the light beam (12) provided by the light source unit (11).

9. The photometer device (1) according to any of the previous claims, wherein the measurement unit (2) comprises a cooling unit (26) which comprises a cooling duct (27) being configured to accommodate a cooling fluid, a cooling fluid inlet opening (28) into the cooling duct (27) and a cooling fluid outlet opening (29) into the cooling duct (27), wherein preferably the cooling duct (27) circumferentially surrounds the light source unit (11).

10. The photometer device (1) according to any of the previous claims, wherein the photometer device (1) has at least one, in particular only a single, electronic access port (30), wherein the electronic access port (30) is comprised by the measurement unit (2).

11. Process system comprising the photometer device (1) according to any of the previous claims, a first process pipe and a second process pipe, wherein the first process pipe is connected to the pipe inlet (8) of the cell housing (6) and the second process pipe is connected to the pipe outlet (9) of the cell housing (6).

12. Use of a photometer device (1) according to any of claims 1 to 10 to measure, in particular continuously measure, an optical parameter of a fluid, in particular liquid or gas, in a process.

13. Kit of parts for assembling a photometer device (1) according to any of claims 1 to 10, the kit comprising a measurement unit (2) and a reflector unit (3), wherein
a. the reflector unit (3) comprises a reflector (5);
b. the measurement unit (2) comprises a detector (10) and a light source unit (11) being configured to provide in an assembled state of the photometer device (1) a light beam (12) along a first light path (13) from the measurement unit (2) through a measurement compartment (7) which is defined by a cell housing (6) of a measurement cell (4) into the reflector unit (3) and on the reflector (5);
c. the reflector (5) is configured such that the light beam (12) being in the assembled state of the photometer device (1) provided along the first light path (13) is in the assembled state of the photometer device (1) reflected along a second light path (14) from the reflector (5) through the measurement cell (4) into the measurement unit (2) and on the detector (10).

14. Use of a measurement unit (2) in a photometer device (1) according to any of claims 1 to 10, wherein the measurement unit (2) comprises a detector (10) and a light source unit (11) being configured to provide in an assembled state of the photometer device (1) a light beam (12) along a first light path (13) from the measurement unit (2) through a measurement compartment (7) which is defined by a cell housing (6) of a measurement cell (4) into the reflector unit (3) and on the reflector (5).

15. Use of a reflector unit in a photometer device (1) according to any of claims 1 to 10, wherein the reflector unit (3) comprises a reflector (5), wherein the reflector (5) is configured such that the light beam (12) being in the assembled state of the photometer device (1) provided along the first light path (13) is in the assembled state of the photometer device (1) reflected along a second light path (14) from the reflector (5) through the measurement cell (4) into the measurement unit (2) and on the detector (10).
